**Europäisches Patentamt**

**European Patent Office**

**Office européen des brevets**

(19)

(11) Veröffentlichungsnummer: **0 347 589 B1**

(12) # EUROPÄISCHE PATENTSCHRIFT

(45) Veröffentlichungstag der Patentschrift:
16.10.91 Patentblatt 91/42

(51) Int. Cl.$^5$: **B29C 47/12**

(21) Anmeldenummer: **89109047.4**

(22) Anmeldetag: **19.05.89**

(54) Spritzkopf für einen Extruder.

(30) Priorität: **20.06.88 DE 3820790**

(43) Veröffentlichungstag der Anmeldung:
**27.12.89 Patentblatt 89/52**

(45) Bekanntmachung des Hinweises auf die
Patenterteilung:
**16.10.91 Patentblatt 91/42**

(84) Benannte Vertragsstaaten:
**AT BE CH DE ES FR GB IT LI NL**

(56) Entgegenhaltungen:
**EP-A- 0 270 816
DE-A- 2 545 042
GB-A- 765 383
US-A- 4 124 346**

(73) Patentinhaber: **Schmidt, Walter
An der Eisenbahn 22
W-3057 Neustadt am Rbge (DE)**
Patentinhaber: **Schmidt, Renate
An der Eisenbahn 22
W-3057 Neustadt am Rbge (DE)**

(72) Erfinder: **Schmidt, Walter
An der Eisenbahn 22
W-3057 Neustadt am Rbge (DE)**
Erfinder: **Schmidt, Renate
An der Eisenbahn 22
W-3057 Neustadt am Rbge (DE)**

(74) Vertreter: **Junius, Walther, Dr.
Wolfstrasse 24
W-3000 Hannover-Waldheim (DE)**

## Beschreibung

Die Erfindung betrifft einen Spritzkopf für einen Extruder, der mitteln einer flanschplatte am Extruderzylinder befestigt ist, geteilt ist und in seinem Inneren mindestens einen Kanal für das Extrudat aufnimmt und der den Extruderzylinder mit der bzw. den Aunformdüsen verbindet, bestehend aus einem an der Flannchplatte befestigten Eingangsteil, welches einen Abschnitt den Kanals für das Extrudat umgibt und einen Vorsprung aufweist, in dessen Oberfläche eine Verteilerfläche für das Extrudat als eine Hälfte eines Abschnittes des Kanals eingeformt ist, einem zweiten Teil, dem die Düse(n) umschließenden Endteil, der am Eingangsteil beweglich und abnehmbar befestigt ist, und einem dritten Teil, dem Mittelteil, welches von den beiden anderen Teilen eingeschlossen ist und mit einer Ausnehmung in seiner einen Oberfläche die andere Hälfte desjenigen Abschnittes-des Kanals bildet, die eine Extrudat-verteilerfläche ist.

Ein derartiger Spritzkopf ist aus der DE-OS 2545042 bekannt geworden. Dieser zeichnet sich dadurch aus, daß für eine Veränderung der Fließwege lediglich der mittlere Spritzkopfteil zu bearbeiten bzw. auszutauschen ist, wobei die Bearbeitung dieses Spritzkopfteiles besonders einfach ist, weil er als von Werkzeugmaschinen leicht aufnehmbarer trapezförmiger Block gestaltet sein kann. Dieser im wesentlichen aus drei Teilen aufgebaute Spritzkopf ist nicht so leicht für den Betrieb zu verklammern wie ein zweiteilig aufgebauter Spritzkopf, wie er beispielsweise durch die EP-A-0270816 bekannt geworden ist. Denn bei dem eingangs genannten Spritzkopf gibt es nicht nur eine einzige Teilungsebene, sondern zwei Teilungsebenen zwischen den drei Spritz-kopfteilen.

Die vorliegende Erfindung vermeidet die Nachteile des Standes der Technik. Es ist die Aufgabe der Erfindung, einen besonders einfach aufgebauten Spritzkopf zu schaffen, bei dem eine Umstellung auf andere Kanalformen in sehr kurzer Zeit mit sehr einfachen Mitteln möglich ist, ohne daß geschulte Monteure eingesetzt werden müssen und lange Produktionsverlustzeiten auftreten.

Die Erfindung besteht darin, daß das Eingangsteil mit dem Endteil über horizontal angeordnete Gelenke verbunden ist, die von im Eingangsteil und im Endteil angeordneten Gelenkwellen und diese Gelenkwellen verbindende Lenker gebildet sind und daß außer zylindrischen Gelenkwellen mindestens eine Gelenkwelle mit Exzentern als Verschluß vorgesehen ist, die diametral einer der zylindrischen Wellen gegenüberliegend angeordnet ist.

Hierdurch ist ein sehr einfacher Verschluß für den Spritz-kopf geschaffen : Die drei Spritzkopfteile hingen durch Gelenke miteinander verbunden aneinander und kinnen in ein-, facher Weise zum Spritzkopf zusammengeklappt werden, wobei eine weitere, mit Exzentern versehene Gelenkwelle dem festen Zusammenspannen der drei Spritzkopfteile dient.

Auf diese Weise werden die drei Spritzkopfteile allein durch Drehen einer Exzenterwelle fest miteinander verklammert, von Hydraulikzylindern betätigte verschiebbare Klammern, wie sie der Stand der Technik bisher kennt, sind nicht mehr erforderlich.

Besonders einfach läßt sich der Verschluß dadurch aufbauen, daß die Gelenkwelle mit Exzentern einerseits in mit Abstand voneinander angeordneten Lenkern und andererseits in mit Abstand voneinander angeordneten Haken eingelegt ist, daß die Haken in den Zwischenräumen zwischen den Lenkern befindlich sind, und daß die Lenker in einer weiteren zylindrischen Gelenkwelle gelagert sind, die in Lageraugen am die Düse umgebenden Endteil des Spritzkopfes ebenfalls gelagert ist, wobei diese Lageraugen zwischen den Lenkern angeordnet sind. Hier werden alle Teile des Verschlusses auf Zug beansprucht, wodurch sie in leichter Ausführungsform gebaut werden können.

Als besonders vorteilhaft hat sich eine Bauform ergeben, bei der das zwischen den beiden äußeren Spritzkopfteilen geklemmte Mittelteil des Spritzkopfes auf seiner Außenseite mit Nuten versehen ist, in die die Lenker eingreifen. Die Lenker zentrieren hier das Mittelteil des Spritzkopfes und halten es in der geklemmten Stellung.

Um den Spritzkopf an herkömmlichen Extrudern in einfacher Weise befestigen zu können, ist es vorteilhaft, wenn das Eingangsteil des Spritzkopfes am Flansch durch mindestens ein vertikales Gelenk gelagert ist. Ein solches vertikales Gelenk kann durch Konusschrauben, die paarweise angeordnet sind, gebildet sein. Hierdurch ergibt sich eine weitere Erleichterung der Reinigung, aber auch eine leichte Möglichkeit, die Extruderschnecke aus dem Zylinder abzuziehen.

Vorteilhaft ist es, wenn die vertikalen Gelenke auf beiden Seiten des Flansches vorgesehen sind.

Vorteilhaft ist es weiterhin, wenn zwischen dem Düsenteil und dem Mittelteil sowie dem Vorsprung des Eingangsteiles eine auswechselbare Siebleiste angeordnet ist. Diese kann leicht während des Betriebes gewechselt werden, wenn durch eine geringfügige Drehung der Exzenter der Zusammenschluß der drei Teile des Spritzkopfes gelockert ist.

Für eine einwandfreie Abdichtung hat es sich als zweckmäßig erwiesen, wenn im Mittelteil parallel zum Kanal Nuten für die Aufnahme von Dichtungen vorgesehen sind, wobei es zweckmäßig ist, wenn diese Nuten auf beiden Seiten des Kanales und als Verbindung zwischen diesen beiden Nuten unterhalb des Kanales entweder am Mittelteil oder am Eingangsteil angeordnet sind. Diese Nuten werden zweckmäßigerweise eckig gefertigt, als Dichtung wird vorteilhafterweise ein runder Kupferdraht eingelegt.

Für eine einwandfreie Abdichtung ist es weiterhin zweckmäßig, wenn am Mittelteil Keilflächen ausgebildet sind, die an entsprechenden Flächen des Eingangsteiles und/oder des Endteiles anliegen.

Weiterhin hat es sich als vorteilhaft erwiesen, wenn in die Haken am Eingangsteil eine Leiste eingelegt ist, welcher am Ort der Lenker Ausnehmungen aufweist und deren der Welle mit den Exzentern zugewandten Seite schräg ist und halbzylindrische Ausnehmungen aufweist, an denen die nicht exzentrischen Teile der Welle anliegen, während die Exzenter in den Augen der Lenker liegen.

Um die Form der Düse bzw. der Düsen lindern zu kinnen, ist es vorteilhaft, wenn eine oder mehrere, die Düse bildende Leisten in das Endteil einlegbar sind.

Weiterhin ist es vorteilhaft, wenn ein Einsatz in das Eingangsteil als auswechselbares oder seitlich schiebbares Sieb und/oder Formwerkzeug eingelegt ist.

Um den Öffnungs- und Schließvorgang zu mechanisieren ist es vorteilhaft, wenn neben der mit Exzentern versehenen Welle die Gelenkwelle oder als weitere, mit Exzentern versehene Welle ausgebildet ist, und wenn vorzugsweise die beiden Exzenterwellen mit je einem Arm versehen sind, wobei vorzugsweise die beiden Arme durch ein Spannmittel, insbesondere einen hydraulischen Servomotor miteinander verbunden sind.

Um beim Zusammenspannen der Teile des Spritzkopfes optimal abzudichten, ist es zweckmäßig, wenn das Endeteil auf der dem unteren vorderen Teil und dem Mittelteil zugewandten Seite eine von zwei Schrägflächen begrenzte Ausnehmung aufweist, deren Schrägflächen an entsprechenden Schrägflächen des Vorsprunges des Eingangsteiles und des Mittelteiles anliegen, und wenn die eine Schrägfläche durch eine anzupressende Leiste gebildet ist.

Das Wesen der vorliegenden Erfindung ist nachstehend anhand eines in der Zeichnung schematisch dargestellten Ausführungsbeispieles näher erläutert. Es zeigen :

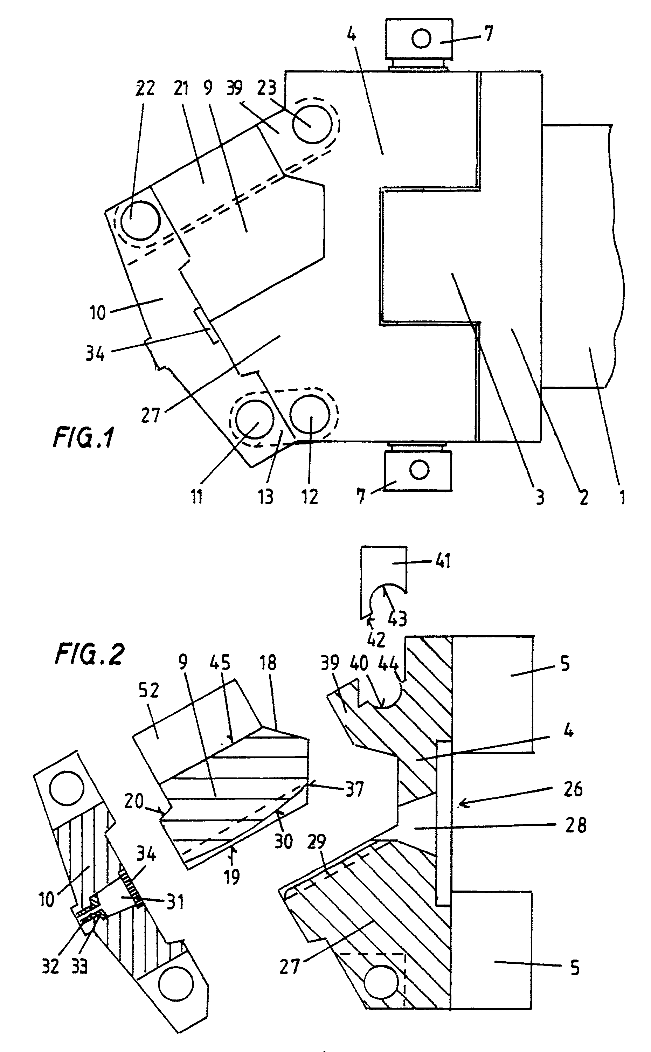

Fig. 1    eine Seitenansicht des Spritzkopfes, teilweise im Schnitt, im geschlossenen Zustand,
Fig. 2    die drei wesentlichen Teile des Spritzkopfes im Schnitt,

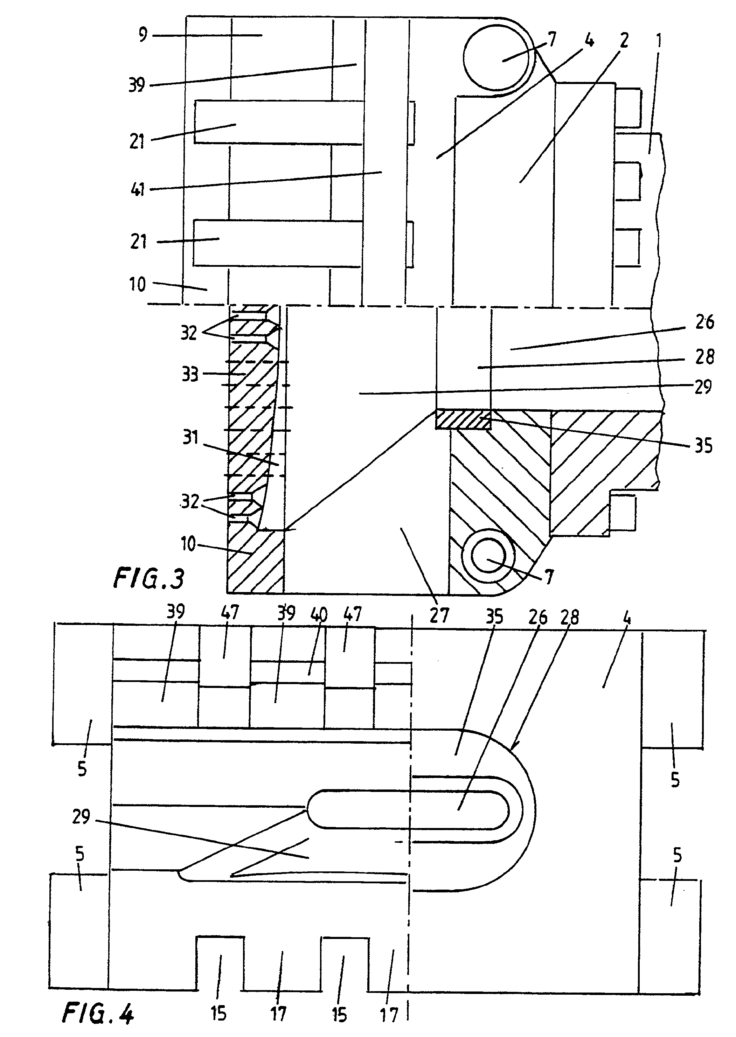

Fig. 3    in der oberen Hälfte eine Ansicht des Spritzkopfes von oben, in der unteren Hälfte im Schnitt,
Fig. 4    eine Ansicht des Eingangsteiles, links von der Düse her, rechts vom Extruder her,

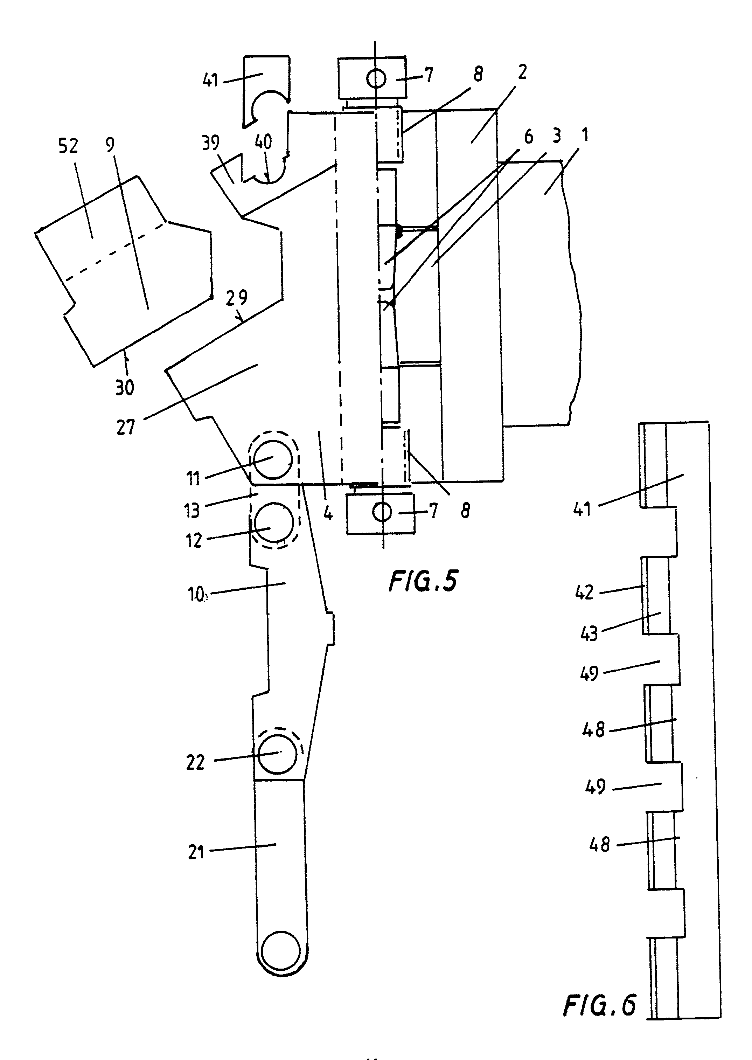

Fig. 5    den Spritzkopf im auseinandergeklappten Zustand,
Fig. 6    eine Ansicht der Leiste, an der die Exzenterwelle anliegt,

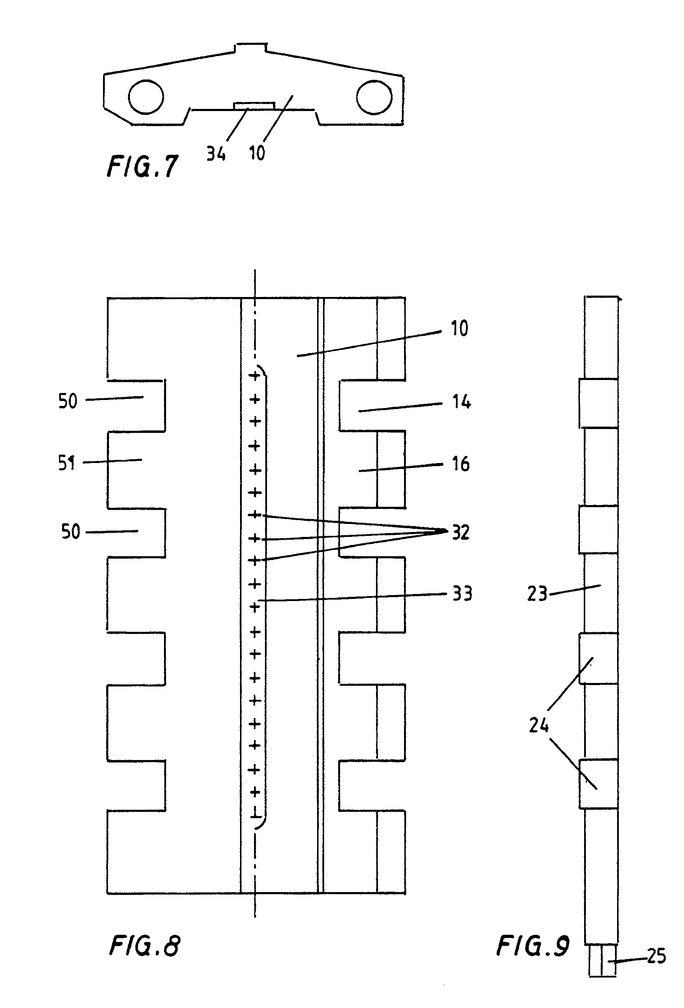

Fig. 7    einen Schnitt durch das Endteil,
Fig. 8    eine Ansicht des Endteiles links von außen, rechts von innen,
Fig. 9    eine Ansicht der Exzenterwelle,

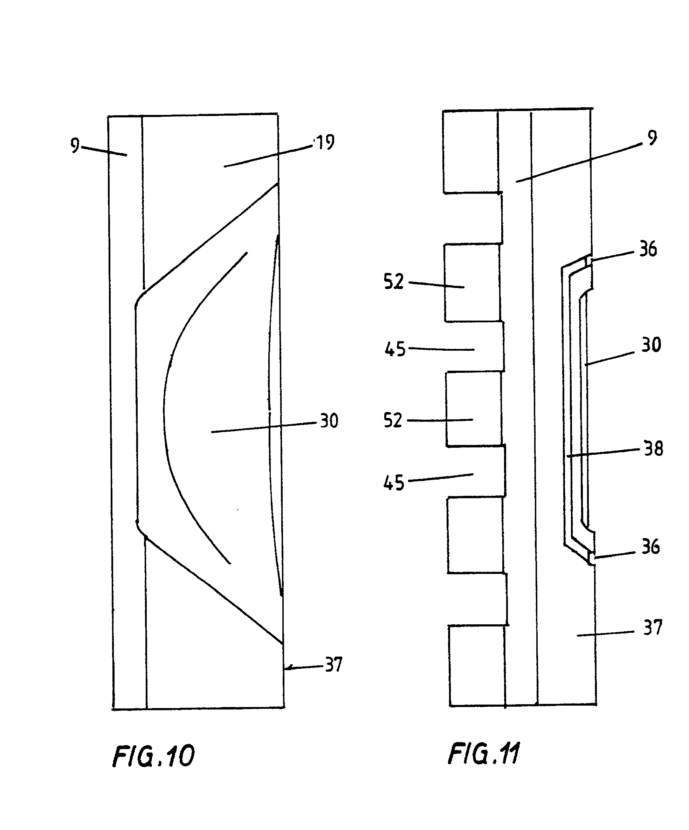

Fig. 10   eine Ansicht des Mittelteiles von innen mit der Verteilerfläche,
Fig. 11   eine Ansicht des Mittelteiles von der Seite,
Fig. 12   Querschnitt durch ein Endteil mit verschiebbarer Siebleiste,
Fig. 13   einen Schnitt durch einen Spritzkopf mit veränderbarer Ausformdüse,
Fig. 14   Ansicht eines Spritzkopfes mit Verschlußarmen,
Fig. 15   einen Schnitt durch einen mit einer Spannleiste versehenen Spritzkopf.

Am Ende des Extruderzylinders 1 ist der Flansch 2 angebracht, welcher auf beiden Seiten Lageraugen 3 trägt, mit denen das Eingangsteil 4 des Spritzkopfes am Flansch 2 gelagert ist. Auch das Eingangsteil weist Lageraugen 5 auf, die gleichachsig mit den Lageraugen 3 angeordnet sind. In diese Lageraugen 5 greift der konische Endteil 6 von Schrauben 7 ein, die im mittleren Teil ein Gewinde 8 aufweisen, welches in das Innengewinde der Lageraugen 5 eingeschraubt ist. Durch Herausnehmen der Schrauben 7 auf einer Seite ist der Spritzkopf um das Schraubenpaar 7 auf der anderen Seite verschwenkbar.

Der Spritzkopf besteht im wesentlichen aus drei Teilen : Dem Eingangsteil 4, dem Mittelteil 9 und dem Endteil 10. Das Eingangsteil 4 und das Endteil 10 sind an ihren unteren Enden durch ein Gelenk 11, 12, 13 verbunden, welches durch zwei Gelenkwellen 11, 12 und durch Lenker 13 miteinander verbunden sind. Damit die Lenker 13 zwischen das Eingangsteil 4 und das Endteil 10 eingebaut werden können, weisen diese beiden Teile Nuten 14, 15 auf, zwischen denen Lageraugen 16, 17 befindlich sind, die jeweils einstückig mit dem Endteil 10 und dem Eingangsteil 4 gefertig sind. Zwischen dem Eingangsteil 4 und dem Endteil 10 ist das Mittelteil 9 geklemmt. Dieses Mittelteil weist aus diesem Grund Keilflächen 18, 19, 20 auf, entsprechende Flächen befinden sich am Eingangsteil 4 und am Endteil 10. Die Keilfläche 19 ist so gelegt, daß sie im mittleren Bereich des Spritzkopfes 4, 9, 10 in Längsrichtung des Kanales für das Extrudat befindlich ist.

Der Verschluß für diesen Spritzkopf wird durch Lenker 21 gebildet, die mit Hilfe von Wellen 22, 23 am Endteil 10 und am Eingangsteil 4 gelagert sind. Zweckmäßig wählt man als Welle 22 eine zylindrische Welle, während man als Welle 23 eine Welle mit Exzentern 24 wählt. Diese Welle 23 weist an ihrem einen Ende eine Anschlußmöglichkeit für ein Drehwerkzeug auf, z.B. einen Vierkant 25.

Durch diese Konstruktion wird ein Verschluß geschaffen, dessen Kraftlinien ringförmig um den Mittelteil des Kanales 26 für das Extrudat verlaufen, welcher zwischen dem Mittelteil 9 und dem Vorsprung 27 in deren Oberflächen eingearbeitet ist. Durch diesen ringförmigen Kraftschluß werden alle Teile auf Zug, die Wellen auf Scherung beansprucht.

Der Kanal 26 für Extrudat ist in dem Eingangsteil 4 durch eine Ausnehmung 28 gebildet, längs der Oberfläche des Vorsprunges 27 ist der Kanal 26 für Extrudat durch eine Ausnehmung 30 der Oberfläche dieses Vorsprunges 27 gebildet, entsprechend befindet sich eine Ausnehmung 30 in der unteren Oberfläche des Mittelteiles 9. Der Kanal 26 verläuft dann weiter durch das Endteil 10, und zwar ist er hier durch die Ausnehmung 31 gebildet. Die Ausnehmungen 28 und 31 sind als Löcher ausgebildet, die Ausnehmungen 29, 30 als Oberflächenausnehmungen. Die Ausnehmung 31 im Endteil 10 geht in dem gezeichneten Ausführungsbeispiel in Düsen 32 über, aus denen das Extrudat extrudiert wird.

Diese Düsen können in einer oder in mehreren auswechselbaren Leisten 33 angeordnet sein, die auswechselbar sind. Für eine leichte Reinigung ist es zweckmäßig, die Düsenleiste zweiteilig, vorzugsweise in der Mitte geteilt, herzustellen.

Im Endteil 10 kann vor den Düsen 32 in einer Ausnehmung eine Siebleiste 34 angeordnet sein. Diese Siebleiste kann Teil einer Siebwechselvorrichtung sein. Durch Lockerung des ringförmigen Verschlusses durch Drehen der Exzenterwelle 23 kann während des Betriebes die Siebleiste 34 verschoben werden. In einer Ausnehmung rings um den kanal 26 im Eingangsteil 4 kann ein Einsatz 35 angeordnet sein, welcher ein Sieb sein kann oder der Formung des Extrudatstranges dienen kann.

Zweckmäßiger im Mittelteil 9 werden beidseits der Oberflächenausnehmung 30 Nuten 36 angeordnet, die miteinander durch eine in der Stirnfläche 37 verlaufende Nut 38 miteinander verbunden sind. In diese Nuten wird als Dichtmittel ein runder Kupferdraht eingelegt.

Die Exzenter 24 der Exzenterwelle 23 sind zweckmäßigerweise so angeordnet, daß sie in den Lageraugen der Lenker 21 zu liegen kommen, während die nicht exzentrischen Teile der Welle 23 in den Haken 39 zu liegen kommen, die am Eingangsteil 4 ausgebildet sind. Das Maul 40 dieser Haken nimmt einerseits mit dem halbzylindrischen Teil die Welle 23 auf, andererseits eine Leiste 41, deren eine Stirnfläche 42 schräg verläuft und halbzylindrische Ausnehmungen 43 aufweist, die mit den halbzylindrischen Ausnehmungen im Maul 40 zylindrische Lager für die Welle 23 bilden. Entsprechend der Schrägfläche 42 ist eine entsprechende Schrägfläche 44 im Hakenmaul 40 ausgebildet.

Damit die Lenker 21 am Eingangsteil 4 angebaut werden kinnen, sind zwischen den Haken 39 Nuten 47 bzw. nutenförmige Ausnehmungen angeordnet, in die die oberen Enden der Lenker 21 eingelegt werden. An entsprechenden Stellen der Leiste 41 sind zwischen den Vorsprüngen 48 Nuten 49 befindlich, in denen im zusammengebauten Zustand die Lenker 21 liegen. — Entsprechend sind am oberen Ende des Endteiles 10 Nuten 50 gebildet. Die zwischen diesen Nuten 50 befindlichen Vorsprünge 51 bilden Lageraugen, in denen die Welle 27 gelagert ist, welche sich durch die (unteren) Löcher der Lenker 21 erstreckt. Die Nuten 50 dienen somit der Aufnahme der Enden der Lenker 21. — Zwischen den Nuten 45 im Rücken des Mittelteiles 9 befinden sich Vorsprünge 52, an deren Seitenwandungen die Lenker 21 anliegen und das Mittelteil 9 zentrieren. Diese Zentrierung ist hochgenau, wenn die Lenker 21 leicht keilförmig gestaltet sind und die Wandungen der Nuten 47, 45, SO entsprechend schräg angeordnet sind. — Dieser Aufbau mit Lenkern 13, 21 und dazwischen angeordneten breitem Eingangs- und Endteil 4, 10 ist ähnlich dem Aufbau einer Panzerkette.

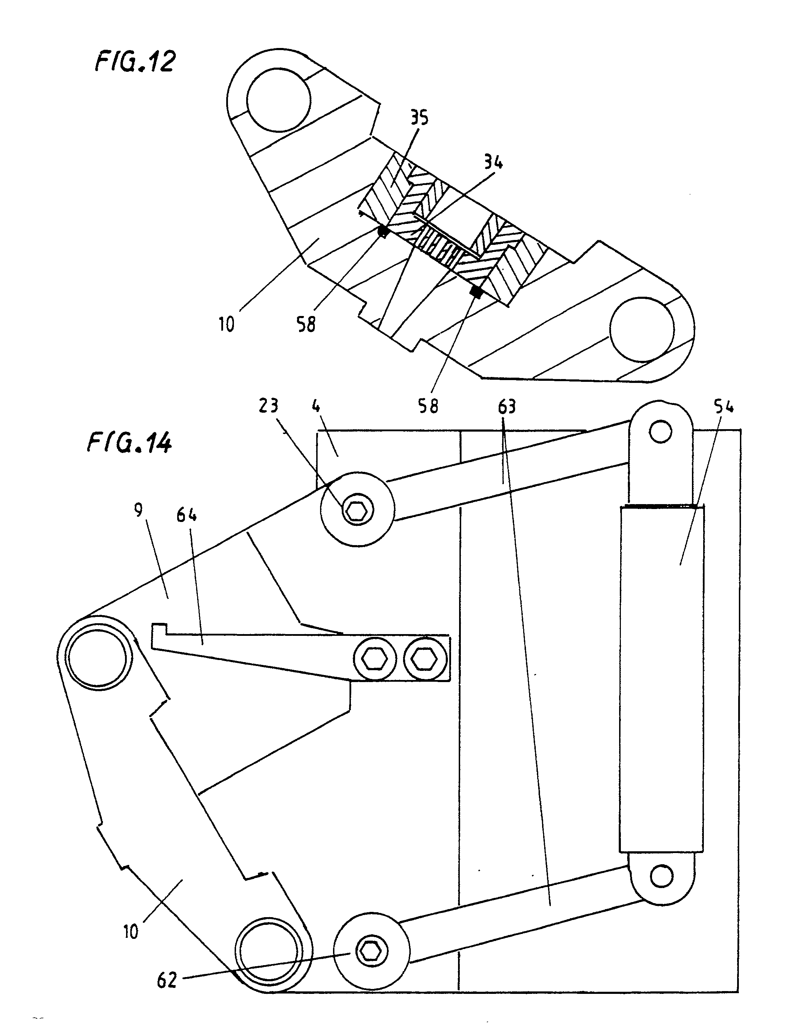

In Fig. 12 ist ein Endteil 10 dargestellt, welches im Einsatz 35 eine seitlich ausschiebbare Siebleiste 34 aufweist. Eine eingelegte Dichtung 58 sorgt für ein einwandfreies Abdichten.

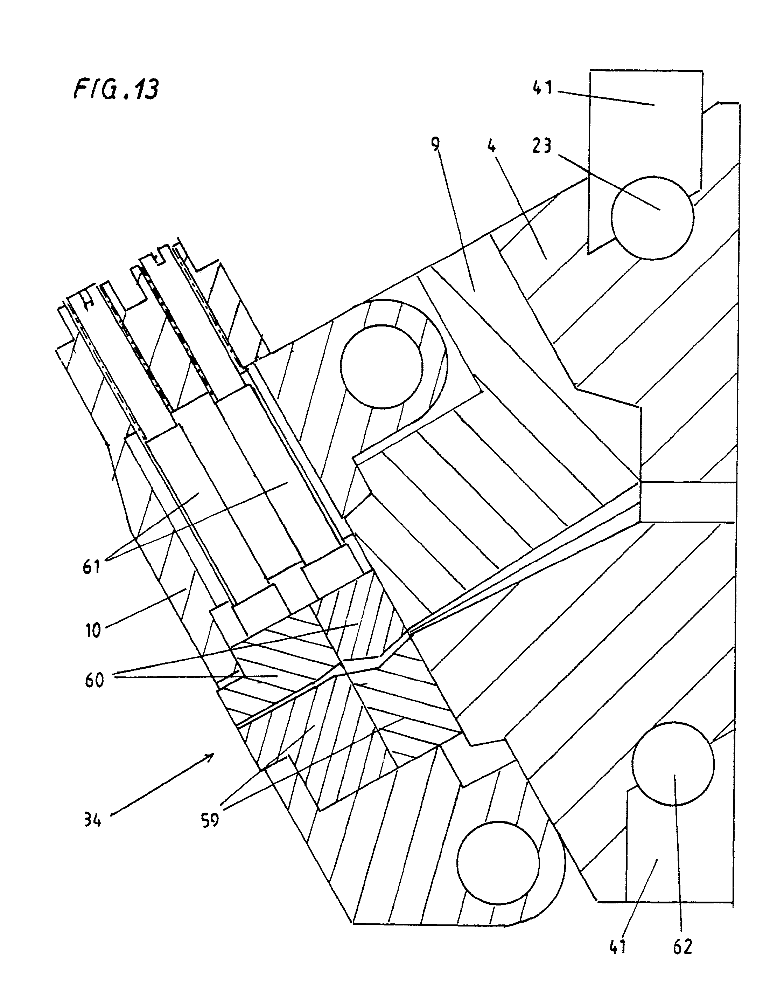

Im Ausführungsbeispiel der Fig. 13 besteht der Einsatz 34 aus fest eingesetzten Teilen 59 und verschiebbaren Einsatzteilen 60, die mittels der Verschiebevorrichtungen 61, die vorzugsweise als Schraubspindeln ausgebildet sind, verschiebbar sind. Mit diesen verschiebbaren Einsatzteilen 60 kann die Spaltweite der Ausformdüse eingestellt und auch korrigiert werden.

Es hat sich in einigen Anwendungsfällen als zweckmäßig erwiesen, neben der Exzenterwelle 23 im oberen Bereich des Eingangsteiles 4 eine weitere Exzenterwelle 62 anstelle der Welle 11 vorzusehen. Diese weitere Exzenterwelle 62 ist ebenfalls mit Hilfe einer Leiste 41 gelagert. Mit diesen zwei Exzenterwellen läßt sich der Spritzkopf besonders gut zusammenspannen.

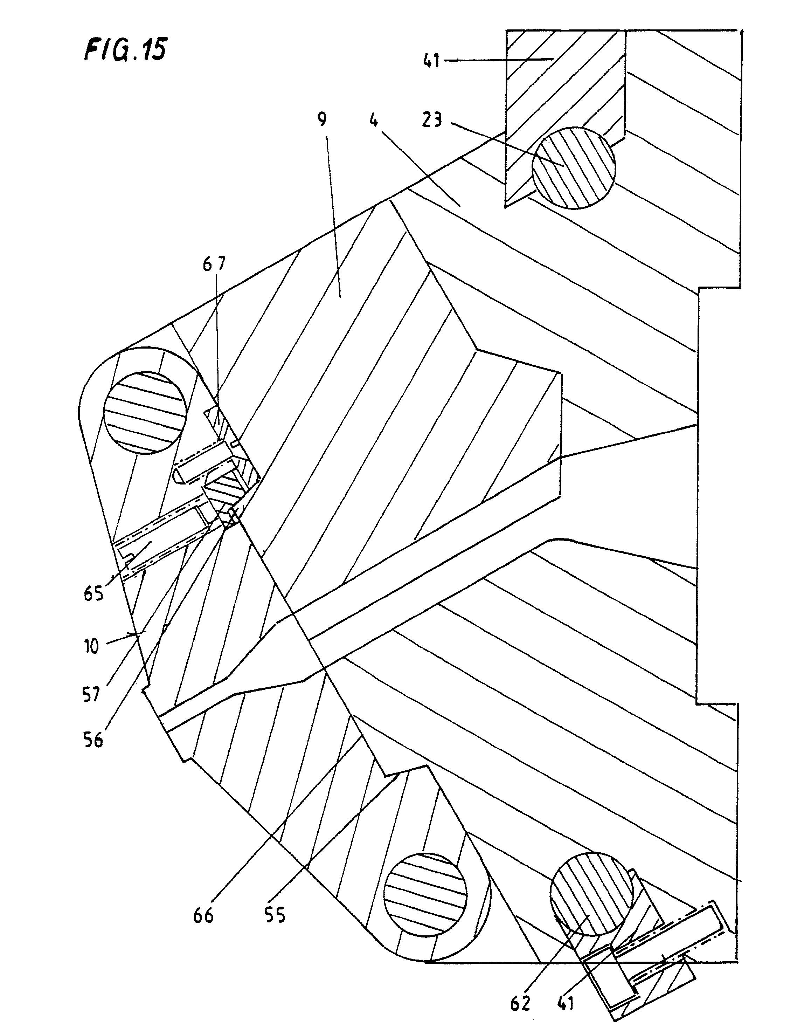

Zweckmäßig ist es, wie Fig. 14 zeigt, beide Exzenterwellen 24, 62 mit einem Arm 63 auszurüsten, um die Verdrehung der Exzenterwellen 23, 62 für das Spannen des Spritzkopfes zu versehen. Zwischen den Enden dieser beiden Arme 63 ist als Spannmittel 54 ein hydraulischer Servomotor vorgesehen, der aus einer Kolben-Zylinder-Einheit besteht. An den beiden Seitenflächen des Spritzkopfes kann ein Haken 64 vorgesehen sein, welcher während der Arbeiten der Montage und der Demontage für die Auflage der Exzenterwelle dient.

Um eine exakte dichtende Anlage des Endteiles 10 an dem Vorsprung 27 des Eingangsteiles 4 und an dem entsprechenden Vorsprung des Mittelteiles 9 zu erreichen, ist es zweckmäßig, wenn das Endteil auf der dem unteren vorderen Teil und dem Mittelteil 9 zugewandten Seite eine von zwei Schrägflächen 55 begrenzte Ausnehmung 56 aufweist, deren Schrägflächen an entsprechenden Schrägflächen des Vorsprunges 27 des Eingangsteiles 4 und des Mittelteiles 9 anliegen, und wenn die eine Schrägfläche durch eine anzupressende Leiste 57 gebildet ist. Diese Leiste 57 ist keilförmig ausgebildet und wird durch Schrauben 65 in ihre Dichtposition gebracht. Beim Anziehen der Schrauben liegen die Flächen 66 bereits durch die Exzenter 24 locker gespannt aneinander. Beim Anziehen der Schrauben 65 wird die Keilleiste so verschoben, daß auch die Flächen 55 eng aneinander anzuliegen kommen und die Keilfläche der Leiste 57 ebenfalls dichtend an der ihr zugewandten Fläche des Mittelteiles 9 dichtend anliegt. Für das Halten der Leiste 57 kann eine weitere Leiste 67 vorgesehen sein.

## Patentansprüche

1. Spritzkopf für einen Extruder, der mittels einer Flanschplatte am Extruderzylinder befestigt ist, geteilt ist und in seinem Inneren mindestens einen Kanal für das Extrudat aufnimmt und
der den Extruderzylinder mit der bzw. den Ausformdüsen verbindet, bestehend aus
einem an der Flanschplatte (2) befestigten Eingangsteil (4), welches einen Abschnitt des Kanals (26) für das Extrudat umgibt und.einen Vorsprung (27) aufweist, in dessen Oberfläche eine Verteilerfläche (29) für das Extrudat als eine Hälfte eines Abschnittes des Kanals (26) eingeformt ist,
einem zweiten Teil, dem die Düse(n) (32) umschließenden Endteil (10), der am Eingangsteil (4) beweglich und abnehmbar befestigt ist,
und einem dritten Teil, dem Mittelteil (9), welches von den beiden anderen Teilen (4, 10) eingeschlossen ist und mit einer Ausnehmung (30) in seiner einen Oberfläche die andere Hälfte desjenigen Abschnittes des Kanals (26) bildet, die eine Extrudatverteilerfläche ist, dadurch gekennzeichnet,
daß das Eingangsteil (4) mit dem Endteil (10) über horizontal angeordnete Gelenke (11, 12 ; 22, 23) verbunden ist, die von im Eingangsteil (4) und im Endteil (10) angeordneten Gelenkwellen (11, 12 ; 22, 23) und diese Gelenkwellen verbindende Lenker (13, 21) gebildet sind und daß außer zylindrischen Gelenkwellen (11, 12 ; 22) mindestens eine Gelenkwelle (23) mit Exzentern (24) als Verschluß vorgesehen ist, die diametral einer der zylindrischen Wellen (11, 12) gegenüberliegend angeordnet ist.

2. Spritzkopf nach Anspruch 1, dadurch gekennzeichnet, daß die Gelenkwelle (23) mit Exzentern (24) einerseits in mit Abstand voneinander angeordneten Lenkern (21) und andererseits in mit Abstand voneinander angeordneten Haken (39) gelagert ist, daß die Haken (39) in den Zwischenräumen zwischen den Lenkern (21) befindlich sind, und daß die Lenker (21) in einer weiteren zylindrischen Gelenkwelle (22) gelagert sind, die in Lageraugen (17) am die Düse (32) umgebenden Endteil (10) ebenfalls gelagert ist, wobei die Lageraügen (17) zwischen den Lenkern (21) angeordnet sind.

3. Spritzkopf nach Anspruch 1, dadurch gekennzeichnet, daß das zwischen den beiden äußeren Spritzkopfteilen (4, 10) geklemmte Mittelteil (9) des Spritzkopfes auf seiner Außenseite mit Nuten (45) versehen ist, in die die Lenker (21) eingreifen.

4. Spritzkopf nach Anspruch 1, dadurch gekennzeichnet, daß das Eingangsteil (4) am Flansch (2) durch mindestens ein vertikales Gelenk gelagert ist.

5. Spritzkopf nach Anspruch 4, dadurch gekennzeichnet, daß das vertikale Gelenk durch zwei Schrauben (7) mit konischem Endteil (6) gebildet ist.

6. Spritzkopf nach Anspruch 4, dadurch gekennzeichnet, daß die vertikalen Gelenke auf beiden Seiten des Flansches (2) angeordnet sind.

7. Spritzkopf nach Anspruch 1, dadurch gekennzeichnet, daß zwischen dem Endteil (10) und dem Mittelteil (9) sowie dem Vorsprung (27) des Eingangsteils (4) eine auswechselbare Siebleiste (34) angeordnet ist.

8. Spritzkopf nach Anspruch 1, dadurch gekennzeichnet, daß im Mittelteil (9) Nuten (36, 38) für die Aufnahme von Dichtungen vorgesehen sind.

9. Spritzkopf nach Anspruch 1, dadurch gekennzeichnet, daß am Mittelteil Keilflächen (18, 19, 20) ausgebildet sind, die an entsprechenden Flächen des Eingangsteils (4) und/oder des Endteils (10) anliegen.

10. Spritzkopf nach Anspruch 1 und 4, dadurch gekennzeichnet, daß in die Haken (39) eine Leiste (41) eingelegt ist, welche am Ort der Lenker (21) Ausnehmungen (46) aufweist und deren der Welle (23) mit den Exzentern (24) zugewandte Stirnseite (37) schräg ist und halbzylindrische Ausnehmungen (43) aufweist, an denen die nicht exzentrischen Teile der Welle (23) anliegen, während die Exzenter (24) in den Augen der lenker (21) liegen.

11. Spritzkopf nach Anspruch 1, dadurch gekennzeichnet, daß eine oder mehrere, die Düse(n) (32) bildende leiste (33) in das Endteil (10) einlegbar sind.

12. Spritzkopf nach Anspruch 1, dadurch gekennzeichnet, daß ein Einsatz (35) in das Eingangsteil (4) als auswechselbares oder seitlich schiebbares Sieb und/oder Formwerkzeug eingelegt ist.

13. Spritzkopf nach Anspruch 1, dadurch gekennzeichnet, daß neben der mit Exzentern (24) versehenen Welle (23) die Gelenkwelle (11) oder (12) als weitere, mit Exzentern versehene Welle ausgebildet ist, und daß vorzugsweise die beiden Exzenterwellen (23, 11 oder 12) mit je einem Arm (63) versehen sind, wobei vorzugsweise die beiden Arme durch ein Spannmittel (54), insbesondere einen hydraulischen Servomotor, miteinander verbunden sind.

14. Spritzkopf nach Anspruch 1 oder 9, dadurch gekennzeichnet, daß das Endteil (10) auf der dem unteren vorderen Teil (27) und dem Mittelteil (9) zugewandten Seite eine von zwei Schrägflächen (55) begrenzte Ausnehmung (56) aufweist, deren Schrägflächen (55) an entsprechenden Schrägflächen des Vorsprunges (27) des Eingangsteiles (4) und des Mittelteiles (9) anliegen, und daß die eine Schrägfläche durch eine anzupressende leiste (57) gebildet ist.


## Claims

1. An extrusion head for an extruder, which is attached to the extruder cylinder by means of a flange plate, is divided, and in its interior comprises at least one channel for the extrudate, and which connects the extruder cylinder to the extrusion nozzle or nozzles, comprising :

an input portion (4) which is attached to the flange plate (2) and which surrounds a section of the channel (26) for the extrudate and is provided with a projection (27), into the surface of which a distributor surface (29) for the extrudate is formed as one half of a section of the channel (26),

a second portion, the end portion (10) surrounding the nozzle(s) (32), which is attached to the input portion (4) so as to be moveable and detachable,

and a third portion, the central portion (9), which is enclosed by the two other portions (4, 10) and, by virtue of a recess (30) in one of its surfaces, forms the other half of that section of the channel (26) which constitutes an extrudate distributor surface,

characterised in that the input portion (4) is connected to the end portion (10) via horizontally extending joints (11, 12 ; 22, 23) which are formed by linking shafts (11, 12 ; 22, 23) arranged in the input portion (4) and in the end portion (10) and by rods (13, 21) which connect these linking shafts, and that in addition to cylindrical linking shafts (11, 12 ; 22) at least one linking shaft (23) with eccentrics (24) serves as a seal which is arranged diametrally opposite one of the cylindrical shafts (11, 12).

2. An extrusion head as claimed in Claim 1, characterised in that the linking shaft (23) with eccentrics (24) is mounted on the one hand in rods (21) arranged at intervals from one another and on the other hand in hooks (39) arranged at intervals from one another, that the hooks (39) are located in the spaces between the rods (21), and that the rods (21) are mounted in a further cylindrical linking shaft (22) which is likewise mounted in bearing lugs (17) of the end portion (10) which surrounds the nozzle (32), where the bearing lugs (17) are arranged between the rods (21).

3. An extrusion head as claimed in Claim 1, characterised in that the central portion (9) of the extrusion head, which is clamped between the two outer extrusion head components (4, 10), is provided on its exterior with grooves (45) into which the rods (21) engage.

4. An extrusion head claimed in Claim 1, characterised in that the input portion (4) is mounted on the flange (2) by means of at least one vertical joint.

5. An extrusion head as claimed in Claim 4, characterised in that the vertical joint is formed by two screws (7) with a conical end piece (6).

6. An extrusion head as claimed in Claim 4, characterised in that the vertical joints are arranged on both sides of the flange (2).

7. An extrusion head as claimed in Claim 1, characterised in that an exchangeable filter strip (34) is arranged between the end portion (10) and the central portion (9) as well as the projection (27) of the input portion (4).

8. An extrusion head as claimed in Claim 1, characterised in that grooves (36, 38) which serve to accommodate seals are arranged in the central portion (9).

9. An extrusion head as claimed in Claim 1, characterised in that wedge surfaces (18, 19, 20) are formed on the central portion, which wedge surfaces abut against corresponding surfaces of the input portion (4) and/or the end portion (10).

10. An extrusion head as claimed in Claim 1 and 4, characterised in that a strip (41) is inserted into the hooks (39), where said strip (41) contains recesses (46) at the location of the rods (21) and its end side (37), facing towards the shaft (23) with the eccentrics (24), is obliquely inclined and contains semi-cylindrical recesses (43) against which the non-eccentric parts of the shaft (23) abut, whilst the eccentrics (24) are located in the lugs of the rods (21).

11. An extrusion head as claimed in Claim 1, characterised in that one or more strips (33) which form the nozzle(s) (32) can be inserted into the end portion (10).

12. An extrusion head as claimed in Claim 1, characterised in that an insert (35) can be inserted into the input portion (4) in the form of an exchangeable or laterally displaceable filter and/or moulding tool.

13. An extrusion head as claimed in Claim 1, characterised in that in addition to the shaft (23) provided with eccentrics (24), the linking shaft (11) or (12) is designed as a further shaft provided with eccentrics, and that preferably the two eccentric shafts (23, 11 or 12) are provided with a respective arm (63), where preferably the two arms are connected to one another by a clamping means (54), in particular a hydraulic servo-motor.

14. An extrusion head as claimed in Claim 1 or 9, characterised in that on the side facing towards the lower, front portion (27) and the central portion (9), the end portion (10) contains a recess (56) which is delimited by two sloping surfaces (55), where said sloping surfaces (55) abut against corresponding sloping surfaces of the projection (27) of the input portion (4) and the central portion (9), and that the first sloping surface is formed by a strip (57) which is to be pressed on.

## Revendications

1. Tête d'injection pour une extrudeuse, qui est fixée au moyen d'une bride sur un cylindre d'extrudeuse, qui est divisée et qui comporte à l'intérieur au moins un canal pour l'extrudat et qui relie le cylindre d'extrudeuse avec la ou les buses de profilage, ladite tête comprenant :

— une partie d'entrée (4) fixée sur la bride (2), entourant une partie du canal (26) pour l'extrudat et comportant une saillie (27) dans la face supérieure de laquelle est formée une surface (29) de distribution de l'extrudat sous la forme d'une moitié d'une partie du canal (26),

— une seconde partie, qui est la partie d'extrémité (10) entourant la ou les buses (32) et qui est fixée de façon mobile et amovible sur la partie d'entrée (4),

— et une troisième partie, qui est la partie centrale (9), entourée par les deux autres parties (4, 10) et formant avec un évidement (30) prévu dans une de ses faces supérieures l'autre moitié de la partie correspondante du canal (26), qui constitue une surface de répartition d'extrudat,

— caractérisée en ce que la partie d'entrée (4) est reliée à la partie extrême (10) par l'intermédiaire d'articulations (11, 12 ; 22, 23) disposées horizontalement et qui sont constituées par des axes d'articulation (11, 12 ; 22, 23) disposés dans la partie d'entrée (4) et dans la partie d'extrémité (10) et par des biellettes (13, 21) reliant ces axes d'articulation et en ce qu'il est prévu, en plus des axes cylindriques d'articulation (11, 12 ; 22) au moins un axe d'articulation (23) pourvu d'excentriques (24) sous la forme d'un obturateur qui est disposé diamétralement à l'opposé d'un des axes cylindriques (11, 12).

2. Tête d'injection selon la revendication 1, caractérisée en ce que l'axe d'articulation (23) pourvu d'excentriques (24) est monté d'un côté dans des biellettes (21) disposées à distance l'une de l'autre et de l'autre côté dans des crochets (39) disposés à distance l'un de l'autre, en ce que les crochets (39) sont situés dans les volumes intermédiaires existant entre les biellettes (21), et en ce que les biellettes (21) sont montées dans un autre axe cylindrique d'articulation (22), qui est monté également dans des oeillets d'appui (17) prévus dans la partie d'extrémité (10) entourant la buse (32), les oeillets d'appui (17) étant disposés entre les biellettes (21).

3. Tête d'injection selon la revendication 1, caractérisée en ce que la partie centrale (9) de la tête d'injection, maintenue entre les deux parties extérieures (4, 10) de la tête d'injection, est pourvue sur son côté extérieur de rainures (45) dans lesquelles s'engagent les biellettes (21).

4. Tête d'injection selon la revendication 1, caractérisée en ce que la partie d'entrée (4) est montée sur la bride (2) par au moins une articulation verticale.

5. Tête d'injection selon la revendication 4, caractérisée en ce que l'articulation verticale est constituée par deux vis (7) pourvues d'une partie extrême conique (6).

6. Tête d'injection selon la revendication 1, caractérisée en ce que les articulations verticales sont disposées sur les deux côtés de la bride (2).

7. Tête d'injection selon la revendication 1, caractérisée en ce qu'une plaque de filtrage (34) amovible est disposée entre la partie d'extrémité (10) et la partie centrale (9) et également la saillie (27) de la partie d'entrée (4).

8. Tête d'injection selon la revendication 1, caractérisée en ce qu'il est prévu dans la partie centrale (9) des rainures (36, 38) pour recevoir des joints d'étanchéité.

9. Tête d'injection selon la revendication 1, caractérisée en ce que sur la partie centrale sont créées des surfaces formant coin (18, 19, 20), qui s'appliquent contre des surfaces correspondantes de la partie d'entrée (4) et/ou de la partie d'extrémité (10).

10. Tête d'injection selon une des revendications 1 et 4, caractérisée en ce que dans les crochets (39) est maintenue une barrette (41) gui est pourvue d'évidements (46) à l'endroit des biellettes (21) et dont le côté frontal (37), dirigé vers l'axe (23) comportant des excentriques (24), est biseauté et comporte des évidements demi-cylindriques (43) dans lesquels sont engagées les parties non excentriques de l'axe (23), tandis que les excentriques (24) sont disposés dans les oeillets des biellettes (21).

11. Tête d'injection selon la revendication 1, caractérisée en ce qu'une ou plusieurs barrettes (23), formant la ou les buses (32), peuvent être maintenues dans la partie d'extrémité (10).

12. Tête d'injection selon la revendication 1, caractérisée en ce qu'un élément rapporté (35) est monté dans la partie d'entrée (4) sous la forme d'un filtre amovible ou pouvant coulisser latéralement et/ou d'un outil de profilage.

13. Tête d'injection selon la revendication 1, caractérisée en ce que, en plus de l'axe (23) pourvu d'excentriques (24), l'axe d'articulation (11) ou (12) est agencé comme un autre axe pourvu d'excentriques et en ce qu'avantageusement les deux axes à excentriques (23, 11 ou 12) sont pourvus chacun d'un bras (63), les deux bras étant alors avantageusement reliés entre eux par un moyen de fixation (54), notamment un servomoteur hydraulique.

14. Tête d'injection selon la revendication 1 ou 9, caractérisée en ce que la partie d'extrémité (10) comporte, sur le côté dirigé vers la partie avant inférieure (27) et la partie centrale (9), un évidement (56) délimité par deux surfaces inclinées (55), qui s'appliquent contre des surfaces inclinées correspondantes de la saillie (27) de la'partie d'entrée (4) et de la partie centrale (9) et en ce qu'une des surfaces inclinées est créée par une barrette (57) à solliciter en pression.

FIG.1

FIG.2

**FIG.3**

**FIG.4**

FIG.5

FIG.6

**FIG.7**

34  10

**FIG.8**

50
51
50

10
14
16
32
33

**FIG.9**

23
24
25

FIG.10

FIG.11

FIG.12

FIG.14

FIG.13

FIG.15